# EUROPEAN PATENT APPLICATION

(11) **EP 4 803 558 A1**
(43) Date of publication of application: **09.09.2026**
(21) Application number: 24886291.4
(22) Date of filing: 31.10.2024
(51) Int. Cl.: C08F 220/18, C08F 220/44, C08F 230/04, H01M 50/431, H01M 50/42, H01M 50/446, H01M 10/052, C08F 220/06, C08F 218/08

(54) **COPOLYMER FOR SEPARATOR AND SECONDARY BATTERY COMPRISING SAME**

(30) Priority: 31.10.2023 KR 20230147595
(71) Applicant: Hansol Chemical Co., Ltd, Seoul 06169 (KR)
(72) Inventor: KIM, Jin-Yeong, Wanju-gun, Jeonbuk-do 55321 (KR); KIM, Young-Su, Wanju-gun, Jeonbuk-do 55321 (KR); LEE, Nam-Joo, Wanju-gun, Jeonbuk-do 55321 (KR); LEE, Go-Eun, Wanju-gun, Jeonbuk-do 55321 (KR); CHO, Seung-Wan, Wanju-gun, Jeonbuk-do 55321 (KR); LEE, Sang-Won, Wanju-gun, Jeonbuk-do 55321 (KR); OH, Sae-Wook, Wanju-gun, Jeonbuk-do 55321 (KR); KWON, Se-Man, Wanju-gun, Jeonbuk-do 55321 (KR)
(74) Representative: Ipsilon
(86) International application number: PCT/KR2024/016904
(87) International publication number: WO 2025/095619

(57) **Abstract**

The present invention relates to: a copolymer comprising a sulfur atom-containing monomer unit, an acrylonitrile-based monomer unit, an acrylate-based monomer unit containing a linear C1-20 alkyl group, and a vinyl acetate-based monomer unit; and a slurry composition, a separator, and a secondary battery comprising same.

## Description

### Technical Field

The present disclosure relates to a copolymer, and a slurry composition, a separator, and a secondary battery including same.

### Background Art

With high energy density, lithium secondary batteries are being extensively used in electrical, electronic, telecommunication, and computer fields. Furthermore, application fields of lithium secondary batteries are being expanded to high-capacity secondary batteries for hybrid vehicles, electric vehicles, and the like, in addition to small lithium secondary batteries for portable electronic devices.

Although the insulation of lithium secondary batteries is enabled by separators, internal or external battery abnormalities or impacts can cause a short circuit between positive and negative electrodes, leading to heat generation and explosion. Thus, ensuring the thermal/chemical safety of separators is extremely important.

Currently, although polyolefin-based films are being used widely as separators, polyolefins have the disadvantages of severe thermal shrinkage at high temperatures and poor mechanical properties.

To enhance the stability of such polyolefin-based separators, a porous separator in which a polyolefin porous substrate film is coated with a mixture composed of inorganic particles and a binder has been developed.

In other words, to suppress battery instability caused by dendrites and thermal shrinkage of polyolefin-based separators caused by high temperatures, one or both surfaces of the porous separator substrate are coated with the inorganic particles in conjunction with the binder. Accordingly, the inorganic particles can impart the function of suppressing the shrinkage rate of the substrate while preparing a further safe separator by the coating layer.

To obtain excellent battery characteristics, such a coating layer is required not only to be evenly coated but also to have strong adhesion to the substrate. In particular, on this basis, improvement in the performance and stability of secondary batteries is required.

### [Documents of related art]

### [Patent Documents]

### (Patent Document 1) Korean Patent No. 10-1430975

(Patent Document 2) Korean Patent Application Publication No. 10-2006-0072065

### Disclosure

### Technical Problem

Accordingly, the present disclosure aims to provide a slurry composition exhibiting excellent adhesion of inorganic materials to a porous substrate and excellent electrode adhesion using a copolymer.

Additionally, the present disclosure aims to provide a separator exhibiting excellent adhesion and electrical properties by application of the slurry composition, and a battery exhibiting excellent performance using the separator.

However, the problems to be solved by the present application are not limited to the aforementioned description, and other problems not mentioned can be clearly understood by those skilled in the art from the following description.

### Technical Solution

In one aspect of the present application, a copolymer including a sulfur atom-containing monomer unit, an acrylonitrile-based monomer unit, an acrylate-based monomer unit containing a straight-chain alkyl group having 1 to 20 carbon atoms, and a vinyl acetate-based monomer unit
is provided.

In another aspect of the present application, a slurry composition including the copolymer and
inorganic particles
is provided.

In a further aspect of the present application, a separator including the slurry composition
is provided.

In yet another aspect of the present application, a secondary battery including the separator
is provided.

### Advantageous Effects

A copolymer of the present disclosure can improve adhesion of inorganic materials to a separator substrate and electrode adhesion, and can enhance heat-resistant properties of a separator by increasing the content of inorganic materials due to the resulting high adhesion.

Additionally, such improved adhesion can minimize pore formation and possible failure rates during battery assembly.

Furthermore, excellent properties such as air permeability and electrical resistance can be imparted to enhance the ionic conductivity in an electrolyte, reaction stability, and life characteristics of a battery.

### Best Mode

Hereinafter, the action and effect of the present disclosure will be described in more detail through specific embodiments of the present disclosure. However, these embodiments are provided only for illustrative purposes of the present disclosure, and the scope of the present disclosure is not limited thereby.

Before discussing the details, it should be noted that all terms or words used herein and used in the appended claims are not construed as being limited to general and dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present application.

As used herein, the singular forms are intended to include the plural forms as well, unless the context clearly indicates otherwise. It will be further understood that the terms "comprise", "include", "have", and the like when used herein, specify the presence of stated features, integers, steps, constituent elements, or combinations thereof but do not preclude the presence or addition of one or more other features, integers, steps, constituent elements, or combinations thereof.

As used herein, the expression "a to b" to represent a numerical range is defined as ≥ a and ≤ b.

In one aspect of the present application, a copolymer may include a sulfur atom-containing monomer unit, an acrylonitrile-based monomer unit, an acrylate-based monomer unit containing a straight-chain alkyl group having 1 to 20 carbon atoms, and a vinyl acetate-based monomer unit.

The sulfur atom-containing monomer unit may behave as a reactive emulsifier. Typically, reactive emulsifiers can perform functions and roles such as chemical structure control, particle size control, stabilization, and dispersion of polymers during emulsion polymerization.

The sulfur atom-containing monomer unit that behaves as a reactive emulsifier can surround the periphery of the copolymer (water-soluble resin) of the present application and, as compared with typical water-soluble resins, can control the stable formation and dispersion of particles having a large particle size.

Accordingly, the sulfur atom-containing monomer unit can help particles having a larger particle size, as compared with those having a smaller particle size, to provide increased adhesion to an electrode and to achieve low resistance in secondary batteries.

Additionally, the sulfur atom-containing monomer unit may have a large dipole moment. Accordingly, adhesion between inorganic materials and a porous substrate or an electrode adhesion can be improved by electrostatic attraction induced by polarization.

In a covalent bond, electrons are drawn more toward the more electronegative atom of the two. In this case, the relatively more electronegative atom carries a (-) charge, and the less electronegative atom carries a (+) charge. This is called a dipole, and the magnitude thereof is called the dipole moment.

In one embodiment, the copolymer of the present application may further include an acrylic acid-based monomer unit, an acrylate-based monomer unit containing a branched-chain alkyl group having 3 to 10 carbon atoms, or a combination thereof.

In the meantime, the copolymer of the present application may not include a styrene-based monomer unit formed by polymerization of styrene monomers.

For example, the copolymer of the present application may include: the sulfur atom-containing monomer unit, the acrylonitrile-based monomer unit, the acrylate-based monomer unit containing a straight-chain alkyl group having 1 to 20 carbon atoms, and the vinyl acetate-based monomer unit; the sulfur atom-containing monomer unit, the acrylonitrile-based monomer unit, the acrylate-based monomer unit containing a straight-chain alkyl group having 1 to 20 carbon atoms, the vinyl acetate-based monomer unit, and the acrylic acid-based monomer unit; the sulfur atom-containing monomer unit, the acrylonitrile-based monomer unit, the acrylate-based monomer unit containing a straight-chain alkyl group having 1 to 20 carbon atoms, the vinyl acetate-based monomer unit, and the acrylate-based monomer unit containing a branched-chain alkyl group having 3 to 10 carbon atoms; or the sulfur atom-containing monomer unit, the acrylonitrile-based monomer unit, the acrylate-based monomer unit containing a straight-chain alkyl group having 1 to 20 carbon atoms, the vinyl acetate-based monomer unit, the acrylic acid-based monomer unit, and the acrylate-based monomer unit containing a branched-chain alkyl group having 3 to 10 carbon atoms.

In one embodiment, the copolymer of the present application, based on 100 wt% of the total weight thereof, may include 0.1 wt% or more and 30 wt% or less of the sulfur atom-containing monomer unit, 1 wt% or more and 40 wt% or less of the acrylonitrile-based monomer unit, 1 wt% or more and 65 wt% or less of the acrylate-based monomer unit containing a straight-chain alkyl group having 1 to 20 carbon atoms, and 1 wt% or more and 30 wt% or less of the vinyl acetate-based monomer unit.

For example, the copolymer of the present application, based on 100 wt% of the total weight thereof, may include 0.5 wt% or more and 30 wt% or less of the sulfur atom-containing monomer unit, 20 wt% or more and 35 wt% or less of the acrylonitrile-based monomer unit, 10 wt% or more and 65 wt% or less of the acrylate-based monomer unit containing a straight-chain alkyl group having 1 to 20 carbon atoms, and 5 wt% or more and 15 wt% or less of the vinyl acetate-based monomer unit.

When the sulfur atom-containing monomer unit having a large dipole moment, or a combination thereof, is present in an amount below the aforementioned range, adhesion may be reduced, thereby deteriorating the properties of a separator.

When the sulfur atom-containing monomer unit having a large dipole moment, or a combination thereof, is present in an amount exceeding the aforementioned range, reaction stability may be reduced, thereby deteriorating the properties of a separator.

When the acrylonitrile-based monomer unit is present in an amount exceeding or below the aforementioned range, the dispersibility of polymer particles and of an inorganic slurry may decrease, or adhesion may be reduced.

When the acrylate-based monomer unit containing a straight-chain alkyl group having 1 to 20 carbon atoms is present in an amount exceeding or below the aforementioned range, adhesion may be reduced.

When the vinyl acetate monomer unit is present in an amount exceeding or below the aforementioned range, this may cause problems with stability, such as storage stability.

In one embodiment, the copolymer of the present application, based on 100 wt% of the total weight thereof, may further include 0.1 wt% or more and 20 wt% or less of the acrylic acid-based monomer unit, 0.1 wt% or more and 35 wt% or less of the acrylate-based monomer unit containing a branched-chain alkyl group having 3 to 10 carbon atoms, or a combination thereof.

For example, the copolymer of the present application, based on 100 wt% of the total weight thereof, may further include 0.5 wt% or more and 10 wt% or less of the acrylic acid-based monomer unit, 10 wt% or more and 35 wt% or less of the acrylate-based monomer unit containing a branched-chain alkyl group having 3 to 10 carbon atoms, or a combination thereof.

When the acrylic acid-based monomer unit is present in an amount exceeding or below the aforementioned range, aggregation and precipitation of the polymer may occur, or adhesion may be reduced.

When the acrylate-based monomer unit containing a branched-chain alkyl group having 3 to 10 carbon atoms is present in an amount exceeding or below the aforementioned range, adhesion may be reduced.

In one embodiment, the sulfur atom-containing monomer unit may be a sulfide group-containing monomer unit, a sulfonate group-containing monomer unit, a sulfone group-containing monomer unit, a sulfonyl ester group-containing monomer unit, a sulfonamide group-containing monomer unit, a sulfonimide group-containing monomer unit, a sulfonyl azide group-containing monomer unit, a sulfonyl hydrazide group-containing monomer unit, a sulfonyl aziridine group-containing monomer unit, a sulfonyl azetidine group-containing monomer unit, a sulfonyl carbamate group-containing monomer unit, a sulfonyl urea group-containing monomer unit, a sulfonyl halide group-containing monomer unit, or a combination thereof, but is not limited thereto.

In one embodiment, the acrylate-based monomer unit containing a straight-chain alkyl group having 1 to 20 carbon atoms may be formed by polymerization of one or more selected from the group consisting of methyl acrylate, methyl methacrylate, ethyl acrylate, ethyl methacrylate, propyl acrylate, propyl methacrylate, butyl acrylate, butyl methacrylate, lauryl acrylate, lauryl methacrylate, stearyl acrylate, and stearyl methacrylate.

In the meantime, the acrylonitrile-based monomer unit may be formed by polymerization of one or more selected from the group consisting of acrylonitrile and methacrylonitrile.

Additionally, the vinyl acetate-based monomer unit may be formed by polymerization of vinyl acetate.

In one embodiment, the sulfur atom-containing monomer unit may be formed by polymerization of sodium vinyl sulfonate.

In one embodiment, the acrylic acid-based monomer unit may be formed by polymerization of one or more selected from the group consisting of, for example, acrylic acid and methacrylic acid.

Additionally, the acrylate-based monomer unit containing a branched-chain alkyl group having 3 to 10 carbon atoms may be formed by polymerization of one or more selected from the group consisting of isopropyl acrylate, isopropyl methacrylate, sec-butyl acrylate, sec-butyl methacrylate, tert-butyl acrylate, tert-butyl methacrylate, 2-ethylhexyl acrylate, and 2-ethylhexyl methacrylate.

In one embodiment, the acrylic acid-based monomer unit may be combined with an alkali metal.

In other words, the carboxylate group of the acrylic acid-based monomer unit may be combined with the alkali metal.

In the meantime, a weight ratio of the alkali metal to the copolymer (weight of one or more selected from the group consisting of the alkali metal and an alkali metal-containing acetate salt compound:weight of the copolymer) may be in the range of 0.1 to 15:100.

For example, the weight ratio of the alkali metal to the copolymer may be in the range of 1 to 10:100.

When the weight ratio of the alkali metal to the copolymer exceeds or falls below the aforementioned weight ratio, the adhesive properties and heat-resistant properties of the separator may deteriorate. In particular, the peel adhesion and electrode adhesion of the separator may be reduced.

The adhesion of the separator in which the alkali metal is contained may be determined based on strength, such as cohesion and repulsion between elements.

In the copolymer of the present application, shifts in the relative balance of cohesion, adhesion, and repulsion among elements may occur depending on the alkali metal content, leading to changes in adhesion to inorganic materials or to an electrode.

The use of the alkali metal in the preparation of the copolymer serving as a binder may improve overall adhesion through the combination of adhesion and cohesion due to increased cohesion between elements. However, the addition of the alkali metal in excessive amounts may rather result in decreased cohesion, leading to reduced overall adhesion.

In the meantime, improvement in the adhesion of the copolymer to inorganic materials refers to increased adhesion between the inorganic materials and a substrate, which may, in turn, mean that the heat-resistant properties of the separator can be improved by increased amounts of the inorganic materials.

The adhesion of the separator to an electrode may reduce possible failure rates observed when loading an electrode during battery assembly, while minimizing pore formation and improving the ionic conductivity in an electrolyte.

Additionally, a single coating of a binder layer on the inorganic coating layer may maximize adhesion to an electrode, which may ultimately minimize battery failure rates and further improve battery performance.

In one embodiment, the copolymer may include a monomer repeating unit represented by Formula 1 below.

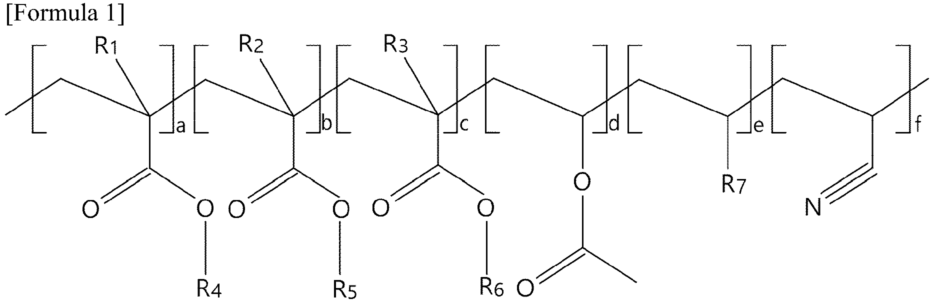

In Formula 1, R₁, R₂, and R₃ may each independently be hydrogen, a straight-chain or branched-chain hydrocarbon having 1 to 4 carbon atoms, or a combination thereof, R₄ may be a straight-chain alkyl group having 1 to 20 carbon atoms, R₅ may be a branched-chain alkyl group having 3 to 10 carbon atoms, R₆ may be a hydrogen or an alkali metal, R₇ may be a sulfide group, a sulfonate group, a sulfone group, a sulfonyl ester group, a sulfonamide group, a sulfonimide group, a sulfonyl azide group, a sulfonyl hydrazide group, a sulfonyl aziridine group, a sulfonyl azetidine group, a sulfonyl carbamate group, a sulfonyl urea group, a sulfonyl halide group, or a combination thereof, and 0.01 ≤ a ≤ 0.65, 0 ≤ b ≤ 0.35, 0 ≤ c ≤ 0.2, 0.01 ≤ d ≤ 0.3, 0.001 ≤ e ≤ 0.3, and 0.01 ≤ f ≤ 0.4.

However, a + b + c + d + e + f = 1.

In Formula 1, a, b, c, d, e, and f correspond to the weight fractions of the respective monomer units, and the sum of the weight fractions of the respective monomer units is 1.

The alkali metal may be Li, Na, or K, but is not limited thereto.

In one embodiment, the R₁, R₂, and R₃ may each independently be one or more selected from the group consisting of hydrogen and methyl, and R₄ may be one or more selected from the group consisting of methyl, ethyl, propyl, butyl, n-pentyl, n-hexyl, n-heptyl, n-octyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-eicosyl, n-henicosyl, and n-docosyl.

Additionally, R₅ may be one or more selected from the group consisting of isopropyl, sec-butyl, tert-butyl, ethylhexyl, 2-ethylhexyl, isopentyl, isoheptyl, and isooctyl.

In one embodiment, the copolymer may be a random or block copolymer depending on a synthesis process.

In one embodiment, the copolymer may have a number average molecular weight in the range of 10,000 to 1,000,000.

When the number average molecular weight of the copolymer falls below 10,000, the fluidity of the copolymer may increase, leading to a decrease in dispersibility and deterioration in heat-resistant properties of the separator. When the number average molecular weight exceeds 1,000,000, the viscosity may be excessively high for use. Additionally, the pores of the separator may be blocked, so the air permeability and resistance may be reduced.

In one embodiment, the copolymer may be in the form of a particle, and the average particle size (diameter) of the particle may be 500 nm or more and 1,500 nm or less.

For example, the average particle size (diameter) of the particle may be 550 nm or more, 600 nm or more, or 650 nm or more, and less than 1,000 nm.

According to another aspect of the present application, a slurry composition may include the copolymer and inorganic particles.

As the inorganic particles, any insulator particles may be used without limitations.

Specific examples of the inorganic particles may include Al₂O₃, AlOOH, SiO₂, TiO₂, ZrO₂, ZnO, NiO, CaO, SnO₂, Y₂O₃, MgO, BaTiO₃, CaTiO₃, SrTiO₃, SiC, Li₃PO₄, Pb(Zr,Ti)O₃(PZT), (Pb,La)(Zr,Ti)O₃(PLZT), and a mixture thereof.

The inorganic particles are not particularly limited in size, but the average particle size thereof may, for example, be in the range of 0.01 µm to 30 µm and is more preferably in the range of 0.1 µm to 10 µm. When the average particle size of the inorganic particles falls below the aforementioned preferable range, dispersibility may be reduced. When the average particle size exceeds the aforementioned preferable range, the thickness of the coating layer after coating may increase, thereby deteriorating mechanical properties.

Additionally, the inorganic particles are not particularly limited in form and may have, for example, a spherical, platy, elliptical, or irregular form.

According to a further aspect of the present application, a separator may include the slurry composition.

The separator may be manufactured by coating at least one surface of a porous substrate film with the slurry composition or by forming the slurry composition into a film and laminating the resulting film to the porous substrate film.

In the meantime, the separator may be used as a separator for a secondary battery and, for example, as a separator for a lithium secondary battery.

One example of manufacturing the separator may include: Step (a) of preparing a polymer solution by dissolving or dispersing the copolymer in a solvent; Step (b) of adding inorganic particles to the polymer solution in Step a), followed by mixing; and Step (c) of coating one or more regions selected from the group consisting of the surface of a polyolefin-based separator substrate and some pores of the substrate with the resulting mixture in Step b), followed by drying.

First, 1) a polymer solution having a form in which the copolymer is dissolved or dispersed in an appropriate solvent is prepared.

As the solvent, those having a solubility index similar to that of the copolymer, serving as a binder, and having a low boiling point are preferable. This is to facilitate uniform mixing, as well as the removal of the solvent thereafter. Non-limiting examples of the solvents usable may include acetone, tetrahydrofuran, methylene chloride, chloroform, dimethylformamide, N-methyl-2-pyrrolidone (NMP), cyclohexane, water, or mixtures thereof. More preferably, the solvent is usable in a water-dispersed state.

2) The inorganic particles are added to the prepared polymer solution and dispersed to prepare the mixture of the inorganic particles and the polymer.

Preferably, a process of dispersing the polymer solution and the inorganic particles is performed. In this case, the dispersion time may be appropriately in the range of 0.1 to 24 hours. While typical dispersion methods may be used, a ball milling method is particularly preferable.

The mixture composed of the inorganic particles and the polymer is not particularly limited in composition, but the thickness, pore size, and porosity of the organic/inorganic composite porous separator of the present disclosure, to be ultimately manufactured, may be controlled thereby.

In other words, as the ratio (I/P) of the inorganic particles (I) to the polymer (P) increases, the porosity of the separator increases, which results in an increase in the thickness of the separator under the same solid content (total weight of the inorganic particles and the polymer). Additionally, pores are more likely to be formed between the inorganic particles, resulting in an increase in pore size. In this case, as the inorganic particle size increases, the interstitial distance between the inorganic materials increases, thereby increasing the pore size.

3) The upper portion of the prepared polyolefin-based separator substrate may be coated with the prepared mixture of the inorganic particles and the polymer, followed by drying, to obtain the separator of the present disclosure.

In this case, typical coating methods known in the art may be used for coating the upper portion of the polyolefin-based separator substrate with the mixture of the inorganic particles and the polymer. For example, various methods, such as dip coating, die coating, roll coating, comma coating, or combinations thereof, may be used. Additionally, when coating the upper portion of the polyolefin-based separator substrate with the mixture of the inorganic particles and the polymer, the coating may be performed on both surfaces of the separator substrate, or may be selectively performed on only one surface.

When using the separator in a secondary battery, lithium ions may be transferred not only via the separator substrate but also via a porous active layer. Additionally, in the case where an external impact causes an internal short circuit, the safety improvement effect described above can be exhibited.

Additionally, the secondary battery may include a positive electrode, a negative electrode, the above separator interposed between the positive and negative electrodes, and an electrolyte.

The secondary battery may be manufactured by typical methods known in the art. In one embodiment thereof, the secondary battery is manufactured by interposing the separator between the electrodes to obtain an assembly and then injecting the electrolyte into the assembly.

The electrodes to be used in combination with the separator are not particularly limited. However, typical positive electrode active materials usable in positive electrodes of secondary batteries may be used as a positive electrode active material, and non-limiting examples thereof include lithium intercalation materials, such as lithium manganese oxide (lithiated magnesium oxide), lithium cobalt oxide (lithiated cobalt oxide), lithium nickel oxide (lithiated nickel oxide), or a composite oxide formed by combinations thereof. Additionally, typical negative electrode active materials usable in negative electrodes of existing electrochemical devices may be used as a negative electrode active material, and non-limiting examples thereof include lithium metal or lithium alloys and lithium intercalation materials, such as carbon, petroleum coke, activated carbon, graphite, or other carbon-based materials. Both the positive and negative electrodes are configured in such forms that the aforementioned positive and negative electrode active materials are bound to a positive electrode current collector, that is, a foil made of aluminum, nickel, or a combination thereof, and a negative electrode current collector, that is, a foil made of copper, gold, nickel, copper alloys, or a combination thereof, respectively.

The electrolyte preferably has a form in which a salt having a structure such as A+B-, including alkali metal cations, such as Li+, Na+, and K+, or ions composed of combinations thereof, as A+ and anions, such as PF₆-, BF₄-, Cl-, Br-, I-, ClO₄-, AsF₆-, CH₃CO₂-, CF₃SO₃-, N(CF₃SO₂)₂-, and C(CF₂SO₂)₃-, or ions composed of combinations thereof, as B-, is dissolved and dissociated in an organic solvent composed of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, NMP, ethyl methyl carbonate (EMC), gamma-butyrolactone (GBL), or a mixture thereof.

In addition to a typical winding process, a process in which the separator and the electrodes are stacked and folded is usable as a process of applying the separator to the battery.

### Mode for Invention

Hereinafter, the present application will be described in more detail using examples, but the present application is not limited thereto.

### [Preparation Example 1] Preparation of copolymer

Into a reaction vessel, 245 parts by weight of distilled water, some parts by weight of a monomer mixture (A), and 0.1 to 5 parts by weight of an emulsifier with respect to 100 parts by weight of the monomer mixture were measured and added, followed by injecting high-purity nitrogen gas while raising the temperature to 70°C with stirring.

Subsequently, 0.15 parts by weight of ammonium persulfate, serving as a degradable initiator, with respect to 100 parts by weight of the monomer mixture, were prepared, and some parts by weight of the remaining monomer mixture (B) were prepared, both of which were successively added into the reaction vessel heated to 70°C to initiate emulsion polymerization.

Immediately after completion of the addition of some parts by weight of the remaining monomer mixture (B), the remaining parts by weight of the remaining monomer mixture (C) were successively added to prepare a copolymer.

To the copolymer prepared through the above polymerization reaction (emulsion polymerization reaction), an aqueous solution of metal hydroxide (NaOH, LiOH, and KOH) was added, thereby preparing a neutralized copolymer.

### [Preparation Example 2] Preparation of slurry for porous film coating

Inorganic particles [alumina (an average particle size of 0.5 µm) or boehmite (an average particle size of 0.7 µm)] and the copolymer serving as a binder, prepared according to Preparation Example 1, were mixed to achieve a solid content weight ratio of 80:20, followed by adding and mixing distilled water to adjust the solid content concentration to 35%. The resulting mixture was sufficiently dispersed by ball milling or using a mechanical stirrer, thereby preparing a slurry.

### [Preparation Example 3] Manufacture of separator

The slurry for porous film coating, prepared according to Preparation Example 2, was applied onto a polyolefin porous substrate (polyethylene (PE), polypropylene (PP), and the like) to form an inorganic coating layer. As for the coating method, various methods, such as dip coating, die coating, gravure coating, and comma coating, are applicable.

In addition, after coating, the resulting coating layer was dried by methods such as warm air drying, hot air drying, vacuum drying, and infrared drying. The drying was performed at a temperature in the range of 50°C to 80°C.

The inorganic coating layer had a thickness in the range of 1 to 6 µm on one or both surfaces. When the thickness is smaller than 1 µm, there is a problem in that the heat resistance of the separator is significantly reduced. When the thickness exceeds 6 µm, the separator has an excessively large thickness, which could lead to decreased battery energy density and increased battery resistance.

### [Examples and Comparative Examples]

In Examples 1 to 10 and Comparative Examples 1 and 4, copolymers were prepared according to Preparation Example 1 by adjusting the contents of monomers, as shown in Table 1 below. Such prepared copolymers were used to prepare slurries for porous film coating according to Preparation Example 2 and manufacture separators according to Preparation Example 3.

In addition, the average particle size (diameter) of the copolymers of Examples 1 to 10 and Comparative Examples 1 and 4, as analyzed by Particle Sizer NICOMP 380, is shown in Table 1 below.

**[Table 1]**

| | Copolymer monomers and contents thereof (wt%) | | | | | | Average particle size (nm) |
|---|---|---|---|---|---|---|---|
| | AN | BA | EHA | MAA | VAc | Na-VS | |
| Example 1 | 24 | 30 | 30 | 5 | 10 | 1 | 650 |
| Example 2 | 24 | 60 | - | 5 | 10 | 1 | 650 |
| Example 3 | 24 | 28 | 28 | 5 | 10 | 5 | 750 |
| Example 4 | 24 | 56 | - | 5 | 10 | 5 | 750 |
| Example 5 | 24 | 61 | - | - | 10 | 5 | 750 |
| Example 6 | 25 | 25 | 25 | 5 | 10 | 10 | 750 |
| Example 7 | 25 | 50 | - | 5 | 10 | 10 | 750 |
| Example 8 | 25 | 55 | - | - | 10 | 10 | 750 |
| Example 9 | 25 | 15 | 15 | 5 | 10 | 30 | 1000 |
| Example 10 | 25 | 30 | - | 5 | 10 | 30 | 1000 |
| Comparative Example 1 | 25 | 30 | 30 | 5 | 10 | 0 | 450 |
| Comparative Example 2 | 25 | 60 | - | 5 | 10 | 0 | 450 |
| Comparative Example 3 | 61 | 12 | 12 | 5 | 10 | 0 | 450 |
| Comparative Example 4 | 61 | 24 | - | 5 | 10 | 0 | 450 |

In terms of the monomers shown in Table 1, AN indicates acrylonitrile, BA indicates butyl acrylate, EHA indicates 2-ethylhexyl acrylate, MAA indicates methacrylic acid, VAc indicates vinyl acetate, and Na-VS indicates sodium vinyl sulfonate.

### [Evaluation Example 1] Adhesion of slurry for porous film coating (peel strength test)

Specimens were prepared by applying a tape with dimensions of 18 mm in width and 30 mm or more in length on the separators, manufactured according to Preparation Example 3 using the binder copolymers of Examples 1 to 10 and Comparative Examples 1 and 4, and then pressing the tape lightly using a hand roller five times.

Such a prepared specimen was mounted on a universal testing machine (UTM) (1 kgf load cell) so that one part of the separator was fixed to a clip on the upper side of the tensile strength machine while fixing the tape, attached to one surface of the separator, to a clip on the lower side, followed by measuring 180° peel strength at a speed of 100 mm/min. The average value thereof was calculated through measurement performed on five or more specimens produced per sample.

### [Evaluation Example 2] Dry adhesion of separator to electrode

The separators, manufactured according to Preparation Example 3 using the binder copolymers of Examples 1 to 10 and Comparative Examples 1 to 4, were cut to dimensions of 20 mm in width and 70 mm in length and prepared.

An electrode cut to dimensions of 25 mm in width and 70 mm in length was placed on the prepared specimen and subjected to a temperature of 65°C and a pressure of 500 kg for 10 seconds using a hot press, thereby preparing specimens.

Such a prepared specimen was mounted on a UTM (1 kgf load cell) so that one part of the separator was fixed to a clip on the upper side of the tensile strength machine while fixing the electrode to a clip on the lower side, followed by measuring 180° peel strength at a speed of 100 mm/min. The average value thereof was calculated through measurement performed on five or more specimens produced per sample.

### [Evaluation Example 3] Wet adhesion of separator to electrode

The separators, manufactured according to Preparation Example 3 using the binder copolymers of Examples 1 to 10 and Comparative Examples 1 to 4, were cut to dimensions of 20 mm in width and 70 mm in length.

An electrode cut to dimensions of 25 mm in width and 70 mm in length was placed on the prepared separator, sealed in an aluminum pouch, immersed in an electrolyte at room temperature for 12 hours, and then subjected to a temperature of 65°C and a pressure of 65 kg/cm² for 30 seconds using a hot press.

Such a prepared specimen was mounted on a UTM (1 kgf load cell) so that one part of the separator was fixed to a clip on the upper side of the tensile strength machine while fixing the electrode to a clip on the lower side, followed by measuring 180° peel strength at a speed of 100 mm/min. The average value thereof was calculated through measurement performed on five or more specimens produced per sample.

### [Evaluation Example 4] Air permeability of separator

The time (in seconds) required for 100 cc of air to permeate the separators, manufactured according to Preparation Example 3 using the binder copolymers of Examples 1 to 10 and Comparative Examples 1 to 4, was measured using an air permeability measurement device. Changes in air permeability were calculated on the basis of the air permeability of an uncoated separator.

### [Evaluation Example 5] Electrical resistance of separator

The separators, manufactured according to Preparation Example 3 using the binder copolymers of Examples 1 to 10 and Comparative Examples 1 to 4, were punched to a dimension of 18 mm in diameter, followed by assembling CR2032 coin cells composed of graphite serving as a negative electrode and NCM622 serving as a positive electrode.

The assembled coin cell was subjected to formation in an impedance device manufactured by Biologics, Inc., followed by measuring the resistance at a state of charge (SOC) level of 50. The resistance value in the case of using each coated separator was calculated comparatively as a percentage when using the resistance value in the case of using the uncoated separator as a reference.

The peel adhesion, dry adhesion to the electrode, and wet adhesion to the electrode of the separators manufactured according to Preparation Example 3 using the binder copolymers of Examples 1 to 10 and Comparative Examples 1 to 4, as evaluated according to Evaluation Examples 1 to 3, are shown in Table 2 below.

**[Table 2]**

| Copolymer | Peel adhesion (gf/mm) | Dry adhesion to electrode (gf/mm) | Wet adhesion to electrode (gf/mm) |
|---|---|---|---|
| Example 1 | 4.98 | 3.31 | 7.01 |
| Example 2 | 5.22 | 2.90 | 8.01 |
| Example 3 | 6.89 | 4.81 | 12.01 |
| Example 4 | 7.01 | 4.30 | 15.11 |
| Example 5 | 7.13 | 4.44 | 15.41 |
| Example 6 | 7.12 | 5.32 | 11.51 |
| Example 7 | 7.22 | 4.77 | 13.56 |
| Example 8 | 7.23 | 4.89 | 13.99 |
| Example 9 | 4.85 | 3.95 | 6.99 |
| Example 10 | 3.98 | 3.01 | 8.61 |
| Comparative Example 1 | 3.54 | 2.86 | 4.10 |
| Comparative Example 2 | 3.66 | 2.31 | 6.96 |
| Comparative Example 3 | 3.22 | 1.86 | 4.11 |
| Comparative Example 4 | 3.45 | 0.88 | 6.21 |

As shown in Table 2, in the case of the separators to which the binder copolymers of Examples 1 to 10 were applied, the peel adhesion fell within the range of 3.5 gf/mm or more and 9.0 gf/mm or less, the dry adhesion to the electrode fell within the range of 2.5 gf/mm or more and 7.0 gf/mm or less, and the wet adhesion to the electrode fell within the range of 5.5 gf/mm or more and 20.0 gf/mm or less.

Specifically, in the case of the separators to which the binder copolymers of Examples 1 to 10 were applied, the peel adhesion fell within the range of 3.90 gf/mm or more and 8.0 gf/mm or less, the dry adhesion to the electrode fell within the range of 3.0 gf/mm or more and 6.0 gf/mm or less, and the wet adhesion to the electrode fell within the range of 6.99 gf/mm or more and 16.0 gf/mm or less.

In the meantime, it was confirmed that the separators to which the binder copolymers of Examples 1 to 10, using sodium vinyl sulfonate containing highly electronegative atoms as a monomer, were applied exhibited higher peel adhesion than the separators to which the binder copolymers of Comparative Examples 1 to 4, prepared without using sodium vinyl sulfonate as a monomer, were applied.

In the meantime, it was confirmed that the separators to which the binder copolymers of Examples 1 to 10, using sodium vinyl sulfonate as a monomer, were applied generally exhibited higher dry adhesion and wet adhesion to the electrode than the separators to which the binder copolymers of Comparative Examples 1 to 4 were applied.

Additionally, based on 100 wt% of the total weight of the binder copolymer, when the content of sodium vinyl sulfonate fell within the range of 5 to 10 wt%, it was confirmed that the peel adhesion, the dry adhesion to the electrode, and the wet adhesion to the electrode were the best.

Furthermore, when containing 2-ethylhexyl acrylate, the dry adhesion tended to increase, whereas the wet adhesion tended to decrease.

The changes in air permeability of the separators manufactured according to Preparation Example 3 using the binder copolymers of Examples 1 to 10 and Comparative Examples 1 to 4, as evaluated according to Evaluation Example 4, are shown in Table 3 below.

**[Table 3]**

| Copolymer | Air permeability [sec/100 cc] |
|---|---|
| Example 1 | △53 |
| Example 2 | △53 |
| Example 3 | △47 |
| Example 4 | △48 |
| Example 5 | △49 |
| Example 6 | △42 |
| Example 7 | △42 |
| Example 8 | △45 |
| Example 9 | △40 |
| Example 10 | △40 |
| Comparative Example 1 | △65 |
| Comparative Example 2 | △63 |
| Comparative Example 3 | △33 |
| Comparative Example 4 | △35 |

As shown in Table 3, in the case of the separators to which the binder copolymers of Examples 1 to 10 were applied, the changes in air permeability fell within the range of △36 sec/100 cc or more and △60 sec/100 c or less.

Specifically, the changes in the air permeability of the separators to which the binder copolymers of Examples 1 to 10 were applied fell within the range of △38 sec/100 cc or more and △55 sec/100 c or less.

In the meantime, it was confirmed that as the content of sodium vinyl sulfonate in each binder copolymer increased, the changes in air permeability compared to that of the uncoated separator tended to decrease.

This is because, as the content of sodium vinyl sulfonate increases, the glass transition temperature of each copolymer increases, thereby reducing the film formation using the copolymer during the coating of the separator and thus failing to block the pores of the separator.

The resistances of the cells to which the separators manufactured according to Preparation Example 3 using the binder copolymers of Examples 1 to 10 and Comparative Examples 1 to 4 were applied, as evaluated according to Evaluation Example 5, are shown in Table 4 below.

**[Table 4]**

| Copolymer | Resistance (%) |
|---|---|
| Example 1 | -0.363 |
| Example 2 | -0.501 |
| Example 3 | -1.952 |
| Example 4 | -2.139 |
| Example 5 | -2.151 |
| Example 6 | -1.877 |
| Example 7 | -1.949 |
| Example 8 | -1.955 |
| Example 9 | -0.942 |
| Example 10 | +0.801 |
| Comparative Example 1 | +1.222 |
| Comparative Example 2 | +1.422 |
| Comparative Example 3 | +2.030 |
| Comparative Example 4 | +2.531 |

As shown in Table 4, in the case of the cells using the separators to which the binder copolymers of Examples 1 to 10 were applied, the electrical resistance fell within the range of -2.5% or more and -0.1% or less.

Specifically, the electrical resistance of the cells using the separators to which the binder copolymers of Examples 1 to 10 were applied fell within the range of -2.3% or more and -0.3% or less.

In other words, compared to the cell to which the separators using the binder copolymers of Comparative Examples 1 to 4 were applied, the electrical resistances of the cells to which the separators using the binder copolymers of Examples 1 to 10 were applied decreased.

In the meantime, it was confirmed that the cells to which the separator manufactured using the binder copolymers of Examples 1 to 10, using sodium vinyl sulfonate containing highly electronegative atoms as a monomer, were applied exhibited lower electrical resistance than the cells to which the separators manufactured using the binder copolymers of Comparative Examples 1 to 4, without using sodium vinyl sulfonate, were applied.

In other words, it was confirmed that, when the binder copolymer included monomer units formed by polymerization of sodium vinyl sulfonate, the electrical resistance of the cell tended to decrease.

This reduction in electrical resistance is attributable to the high electronegativity of sodium vinyl sulfonate and its larger particle size relative to the inorganic material, which together improve ionic conductivity in the electrolyte.

That is, it was confirmed that a copolymer including sulfur atom-containing monomer units within the aforementioned content range can be used to manufacture a separator with excellent adhesion to a substrate and an electrode.

Additionally, it was confirmed that a separator with excellent properties, such as air permeability and electrical resistance, to which a copolymer including monomer units containing sulfur atoms in the present application is applied, can be used to improve the performance of a secondary battery.

The scope of the present disclosure is defined by the appended claims rather than the detailed description presented above. All changes or modifications derived from the meaning and scope of the claims and the concept of equivalents should be construed to fall within the scope of the present disclosure.

### Industrial Applicability

A copolymer of the present disclosure can improve adhesion of inorganic materials to a separator substrate and electrode adhesion, and can enhance heat-resistant properties of a separator by increasing the content of inorganic materials due to the resulting high adhesion.

Additionally, such improved adhesion can minimize pore formation and possible failure rates during battery assembly.

Furthermore, excellent properties such as air permeability and electrical resistance can be imparted to enhance the ionic conductivity in an electrolyte, reaction stability, and life characteristics of a battery.

## Claims

1. A copolymer comprising:
a sulfur atom-containing monomer unit;
an acrylonitrile-based monomer unit;
an acrylate-based monomer unit containing a straight-chain alkyl group having 1 to 20 carbon atoms; and
a vinyl acetate-based monomer unit.

2. The copolymer of claim 1, further comprising:
an acrylic acid-based monomer unit;
an acrylate-based monomer unit containing a branched-chain alkyl group having 3 to 10 carbon atoms; or
a combination thereof.

3. The copolymer of claim 1, wherein the copolymer, based on 100 wt% of the total weight thereof, comprises:
0.1 wt% or more and 30 wt% or less of the sulfur atom-containing monomer unit;
1 wt% or more and 40 wt% or less of the acrylonitrile-based monomer unit;
1 wt% or more and 65 wt% or less of the acrylate-based monomer unit containing a straight-chain alkyl group having 1 to 20 carbon atoms; and
1 wt% or more and 30 wt% or less of the vinyl acetate-based monomer unit.

4. The copolymer of claim 2, wherein the copolymer, based on 100 wt% of the total weight thereof, further comprises:
0.1 wt% or more and 20 wt% or less of the acrylic acid-based monomer unit;
0.1 wt% or more and 35 wt% or less of the acrylate-based monomer unit containing a branched-chain alkyl group having 3 to 10 carbon atoms; or
a combination thereof.

5. The copolymer of claim 1, wherein the sulfur atom-containing monomer unit comprises a sulfide group-containing monomer unit, a sulfonate group-containing monomer unit, a sulfone group-containing monomer unit, a sulfonyl ester group-containing monomer unit, a sulfonamide group-containing monomer unit, a sulfonimide group-containing monomer unit, a sulfonyl azide group-containing monomer unit, a sulfonyl hydrazide group-containing monomer unit, a sulfonyl aziridine group-containing monomer unit, a sulfonyl azetidine group-containing monomer unit, a sulfonyl carbamate group-containing monomer unit, a sulfonyl urea group-containing monomer unit, a sulfonyl halide group-containing monomer unit, or a combination thereof.

6. The copolymer of claim 1, wherein the acrylate-based monomer unit containing a straight-chain alkyl group having 1 to 20 carbon atoms is formed by polymerization of one or more selected from the group consisting of methyl acrylate, methyl methacrylate, ethyl acrylate, ethyl methacrylate, propyl acrylate, propyl methacrylate, butyl acrylate, butyl methacrylate, lauryl acrylate, lauryl methacrylate, stearyl acrylate, and stearyl methacrylate, and
the acrylonitrile-based monomer is formed by polymerization of one or more selected from the group consisting of acrylonitrile and methacrylonitrile.

7. The copolymer of claim 1, wherein the sulfur atom-containing monomer unit is formed by polymerization of sodium vinyl sulfonate.

8. The copolymer of claim 2, wherein the acrylic acid-based monomer unit is formed by polymerization of one or more selected from the group consisting of acrylic acid and methacrylic acid, and
the acrylate-based monomer unit containing a branched-chain alkyl group having 3 to 10 carbon atoms is formed by polymerization of one or more selected from the group consisting of isopropyl acrylate, isopropyl methacrylate, sec-butyl acrylate, sec-butyl methacrylate, tert-butyl acrylate, tert-butyl methacrylate, 2-ethylhexyl acrylate, and 2-ethylhexyl methacrylate.

9. The copolymer of claim 1, wherein the copolymer comprises a monomer repeating unit represented by Formula 1 below, 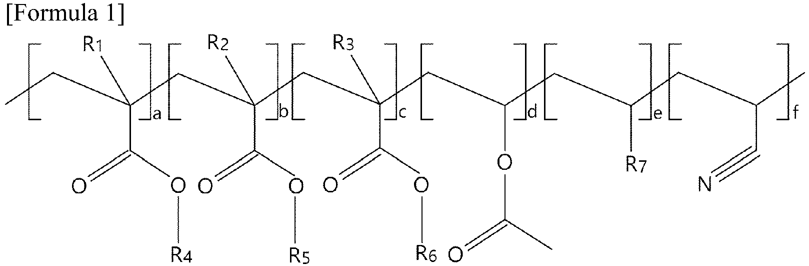
wherein in Formula 1,
R₁, R₂, and R₃ are each independently hydrogen, a straight-chain or branched-chain hydrocarbon having 1 to 4 carbon atoms, or a combination thereof,
R₄ is a straight-chain alkyl group having 1 to 20 carbon atoms,
R₅ is a branched-chain alkyl group having 3 to 10 carbon atoms,
R₆ is a hydrogen or an alkali metal,
R₇ is a sulfide group, a sulfonate group, a sulfone group, a sulfonyl ester group, a sulfonamide group, a sulfonimide group, a sulfonyl azide group, a sulfonyl hydrazide group, a sulfonyl aziridine group, a sulfonyl azetidine group, a sulfonyl carbamate group, a sulfonyl urea group, a sulfonyl halide group, or a combination thereof,
0.01 ≤ a ≤ 0.65, 0 ≤ b ≤ 0.35, 0 ≤ c ≤ 0.2, 0.01 ≤ d ≤ 0.3, 0.001 ≤ e ≤ 0.3, and 0.01 ≤ f ≤ 0.4, and $a + b + c + d + e + f = 1 .$

10. A slurry composition comprising:
the copolymer of any one of claims 1 to 9; and
inorganic particles.

11. A separator comprising: the slurry composition of claim 10.

12. A secondary battery comprising: the separator of claim 11.
